# EUROPÄISCHE PATENTSCHRIFT

(11) **EP 3 418 248 B1**
(45) Veröffentlichungstag und Bekanntmachung des Hinweises auf die Patenterteilung: **04.12.2019**
(21) Anmeldenummer: 18177637.8
(22) Anmeldetag: 14.06.2018
(51) Int. Cl.: B66F 9/075, B66F 17/00, B62D 51/02

(54) **FLURFÖRDERZEUG MIT RÜCKHALTEVORRICHTUNG**
INDUSTRIAL TRUCK WITH RETAINING DEVICE
CHARIOT DE MANUTENTION DOTÉ DU DISPOSITIF DE RETENUE

(30) Priorität: 22.06.2017 DE 102017113858
(43) Veröffentlichungstag der Anmeldung: 26.12.2018
(73) Patentinhaber: Jungheinrich Aktiengesellschaft, 22047 Hamburg (DE)
(72) Erfinder: Klimke, Mario, 04289 Leipzig (DE); Hohmann, Michael, 04289 Leipzig (DE)
(74) Vertreter: Hauck Patentanwaltspartnerschaft mbB

(56) Entgegenhaltungen:
- EP-A1- 2 218 631
- DE-U1-202015 107 014
- DATABASE WPI Week 201212 Thomson Scientific, London, GB; AN 2012-A08459 XP002786422, -& SE 1 050 543 A1 (BT PROD AB) 1. Dezember 2011 (2011-12-01)

## Beschreibung

Die Erfindung betrifft ein Flurförderzeug, insbesondere einen Elektrohubwagen, umfassend einen Antriebsteil, eine mit dem Antriebsteil verbundene Standplattform sowie eine an dem Antriebsteil angeordnete Rückhaltevorrichtung mit mindestens zwei Seitenarmen, die verstellbar in eine Ruheposition an das Antriebsteil und in eine Betriebsposition fortragend vom Antriebsteil ausgebildet sind, wobei die Seitenarme in der Betriebsposition einander gegenüberliegend zur seitlichen Sicherung einer auf der Standplattform stehenden Bedienperson vom Antriebsteil fortragen.

Bekannte Flurförderzeuge umfassen üblicherweise einen Lastteil zur Aufnahme von Lasten sowie einen Antriebsteil zur Bewegung des Flurförderzeugs. Insbesondere Hubwagen können über eine am Antriebsteil angeordnete Bediendeichsel oder ein Lenkrad gesteuert werden. Bei eher geringen Fahrgeschwindigkeiten kann eine Bedienperson hinter dem Fahrzeug herlaufen, während insbesondere bei höheren Geschwindigkeiten die Bedienperson auf einer an dem Antriebsteil angeordneten Standplattform mitfahren kann. Zur seitlichen Absicherung der auf der Standplattform befindlichen Bedienperson kann dabei eine Rückhaltevorrichtung vorgesehen sein. Die Rückhaltevorrichtung kann beispielsweise ausklappbare Seitenarme aufweisen, die sich in einer Betriebsposition beidseitig der Standplattform erstrecken. Eine Bedienperson wird durch diese Seitenarme vor einem seitlichen Sturz von der Standplattform geschützt. Insbesondere bei Kurvenfahrten erhöht dies die Sicherheit.

Die Seitenarme der Rückhaltevorrichtung können beispielsweise über eine starre Verbindung im Rahmen des Antriebsteils um eine horizontale Achse von unten nach oben hochgeklappt werden, wie es aus der DE 20 2015 107 014 U1 bekannt wurde. Auch können die Seitenarme seitlich ausklappbar ausgestaltet sein, wobei die Seitenarme dann jeweils um eigene senkrecht stehende Drehachsen ausgeklappt werden. Eine Bewegung der Seitenarme nach außen, also voneinander fort, wird in der Betriebsposition dabei üblicherweise durch starre Endanschläge begrenzt.

Aus der EP 2 218 631 A1, welches ein Flurförderzeug gemäß dem Oberbegriff des Anspruchs 1 offenbart, sind seitlich ausklappbare Seitenarme bekannt geworden, welche zusätzlich höhenverstellbar sind. Dies wird dadurch realisiert, dass die ausgeklappten Seitenarme um eine horizontale Achse verschwenkbar angeordnet sind.

Der Erfindung liegt die Aufgabe zugrunde, ein Flurförderzeug der eingangs genannten Art zur Verfügung zu stellen, dessen Seitenarme einen höheren Komfort für die Bedienperson ermöglichen und zudem besser vor Beschädigungen geschützt sind.

Die Erfindung löst die Aufgabe durch den Gegenstand des Anspruchs 1. Vorteilhafte Ausgestaltungen sind Gegenstand der Unteransprüche, der Beschreibung sowie der Figuren.

Für ein Flurförderzeug der eingangs genannten Art löst die Erfindung die Aufgabe dadurch, dass mindestens einer der Seitenarme ausgehend von der Betriebsposition elastisch nach außen auslenkbar ist.

Das erfindungsgemäße Flurförderzeug kann insbesondere ein Elektrohubwagen sein, beispielsweise ein Niederhubwagen oder ein Hochhubwagen. Wie eingangs erläutert, kann das Flurförderzeug neben dem Antriebsteil einen Lastteil umfassen zur Bewegung von Lasten. Der Lastteil kann beispielsweise über ein Hubteil bzw. einen Hubmast verfügen, an dem zwei Lastgabeln angeordnet sind. Über das Hubteil bzw. den Hubmast können die Lastgabeln nach oben und nach unten sowie gegebenenfalls nach vorn bewegt werden. Zur Bewegung des Lastteils sowie zum Antrieb des Flurförderzeugs kann das Antriebsteil einen Elektromotor sowie eine Batterie umfassen. Eine Bedienperson kann das Flurförderzeug beispielsweise über eine mit dem Antriebsteil verbundene Kurzdeichsel oder ein Lenkrad steuern.

Das Flurförderzeug verfügt zudem über eine mit dem Antriebsteil verbundene Standplattform für eine Bedienperson, wobei die Standplattform starr mit dem Antriebsteil verbunden oder dem Antriebsteil gegenüber beweglich ausgebildet sein kann. Beispielsweise kann die Standplattform fest am Antriebsteil montiert sein. Beispielsweise kann die Standplattform hochklappbar ausgebildet sein, so dass eine Bedienperson das Flurförderzeug auch im Gehen bedienen kann. Befindet sich die Bedienperson auf der Standplattform, so kann sie mit dem Flurförderzeug mitfahren. Zur seitlichen Absicherung der Bedienperson bei derartigen Fahrten umfasst das Flurförderzeug eine an dem Antriebsteil angeordnete Rückhaltevorrichtung mit zumindest zwei Seitenarmen. Die Seitenarme können in eine Ruheposition an das Antriebsteil verstellt werden, beispielsweise eingeklappt werden, und in eine Betriebsposition fortragend vom Antriebsteil verstellt werden, beispielsweise ausgeklappt werden. Die mindestens zwei Seitenarme können beispielsweise um eine gemeinsame Drehachse verstellbar ausgebildet sein und somit gemeinsam bewegt werden. Auch können die mindestens zwei Seitenarme jeweils eigene Drehachsen aufweisen und somit separat verstellbar sein. Die mindestens zwei Seitenarme können beispielsweise um eine gemeinsame oder um jeweils eine eigene horizontale Achse von unten nach oben hochgeklappt werden. Auch können die Seitenarme seitlich ein- oder ausklappbar ausgestaltet sein. In der Betriebsposition sichern die Seitenarme eine Bedienperson beidseitig ab. Somit verhindern die Seitenarme, dass eine auf der Standplattform befindliche Bedienperson seitlich von der Standplattform fällt, was insbesondere bei Kurvenfahrten von Vorteil ist. Seitlich bedeutet hierbei in der Bewegungsebene des Flurförderzeugs im Wesentlichen senkrecht zur Fahrtrichtung. Die gesamte Rückhaltevorrichtung kann auswechselbar ausgestaltet sein, kann also aus dem Flurförderzeug entnommen werden. Insbesondere kann die Rückhaltevorrichtung als Modul vorgefertigt werden.

Erfindungsgemäß ist dabei vorgesehen, dass mindestens einer der Seitenarme ausgehend von der Betriebsposition elastisch seitlich nach außen auslenkbar ist. Bevorzugt sind alle Seitenarme der Rückhaltevorrichtung derart elastisch auslenkbar. Seitlich nach außen auslenkbar bedeutet hierbei, dass der mindestens eine Seitenarm von dem mindestens einen gegenüberliegenden Seitenarm fortbewegt wird. Der mindestens eine auslenkbare Seitenarm kann ein stückweit nachgeben, wenn eine Bedienperson sich gegen den Seitenarm lehnt. Somit wird zumindest einer der Seitenarme nicht starr in seiner Betriebsposition gehalten, sondern kann nach außen, also seitlich, nachgeben. Da diese Auslenkung elastisch erfolgt, wird eine gegen den entsprechenden Seitenarm lehnende Person besonders komfortabel abgefedert. Dies erhöht nicht nur den Komfort für die Bedienperson sondern auch die Sicherheit, da das Verletzungsrisiko einer auf der Standplattform befindlichen Bedienperson verringert wird. Zudem sind derart elastisch auslenkbare Seitenarme besser vor Beschädigungen geschützt als starr mit dem Antriebsteil verbundene Seitenarme. Aufgrund der elastischen Auslenkbarkeit kann ein entsprechender Seitenarm flexibel auf durch die Bedienperson ausgeübte Kräfte oder auf externe Kräfte reagieren und so auch hohe Belastungen unbeschadet überstehen. Die elastische Auslenkung des bzw. der Seitenarme kann dabei eine Federung und/oder eine Dämpfung sein, der mindestens eine Seitenarm kann also gefedert und/oder gedämpft seitlich nach außen auslenkbar sein. Die Federung kann dabei insbesondere auslenkungsabhängig sein, während die Dämpfung geschwindigkeitsabhängig ist.

Nach einer bevorzugten Ausgestaltung weist die Rückhaltevorrichtung ein Gehäuse und eine Dämpfungseinrichtung auf, wobei die Dämpfungseinrichtung ein an dem mindestens einen elastisch auslenkbaren Seitenarm angeordnetes erstes Dämpfungsbauteil und ein in oder an dem Gehäuse angeordnetes zweites Dämpfungsbauteil umfasst, wobei im Zuge der Auslenkbewegung des mindestens einen elastisch auslenkbaren Seitenarms nach außen das erste Dämpfungsbauteil und das zweite Dämpfungsbauteil zusammenwirken. In dem Gehäuse der Rückhaltevorrichtung können die mindestens zwei Seitenarme beweglich gelagert sein. Durch das Zusammenwirken der Dämpfungsbauteile wird die elastische Auslenkbarkeit des mindestens einen elastisch auslenkbaren Seitenarms realisiert. Sind mehrere elastisch auslenkbare Seitenarme vorgesehen, so können entsprechend weitere Dämpfungsbauteile vorgesehen sein. Durch die Dämpfungseinrichtung bzw. deren Dämpfungsbauteile erfolgt somit eine Federung bzw. Dämpfung zwischen dem mindestens einen Seitenarm und dem Gehäuse der Rückhaltevorrichtung. Die Rückhaltevorrichtung kann über ihr Gehäuse fahrzeugfest mit dem Antriebsteil verbunden sein. Über die mit dem Antriebsteil verbundene Rückhaltevorrichtung erfolgt somit eine Federung bzw. Dämpfung auch gegenüber dem Antriebsteil.

Nach einer Ausgestaltung umfasst das erste Dämpfungsbauteil einen Anschlag und das zweite Dämpfungsbauteil ein elastisches Element oder das erste Dämpfungsbauteil ein elastisches Element und das zweite Dämpfungsbauteil einen Anschlag oder das erste Dämpfungsbauteil und das zweite Dämpfungsbauteil ein elastisches Element. Beispielsweise kann also an dem mindestens einen elastisch auslenkbaren Seitenarm ein Anschlag angeordnet sein, der mit einem an dem Antriebsteil angeordneten elastischen Element zusammenwirkt. Ab einer vorbestimmten Auslenkung des mindestens einen Seitenarms drückt dabei der Anschlag gegen das elastische Element des Antriebsteils, wodurch der mindestens eine Seitenarm in seiner Bewegung nach außen elastisch wird. Auch kann das elastische Element an dem Seitenarm und der Anschlag an dem Antriebsteil angeordnet sein. Die Funktionsweise ist dabei grundsätzlich die gleiche. Grundsätzlich können auch das erste Dämpfungsbauteil sowie das zweite Dämpfungsbauteil durch ein elastisches Element gebildet sein. Das elastische Element kann beispielsweise ein Feder oder eine pneumatische oder hydraulische Dämpfung sein. Die Dämpfungseinrichtung wirkt dabei bevorzugt nur, wenn sich der mindestens eine Seitenarm in der Betriebsposition befindet. Das erste und das zweite Dämpfungsbauteil können dafür so angeordnet sein, dass diese nur in der Betriebsposition des mindestens einen elastisch auslenkbaren Seitenarms miteinander in Kontakt treten.

Nach einer Ausgestaltung kann die Federung und/oder Dämpfung des mindestens einen Seitenarms verstellbar sein. Beispielsweise kann die Federung und/oder Dämpfung auf die Masse einer Bedienperson eingestellt werden. Insbesondere kann die Federstärke und/oder Dämpfungsstärke eines oder mehrerer verwendeter elastischer Elemente verstellbar sein. Die elastische Bewegung des mindestens einen Seitenarms kann somit flexibel auf unterschiedliche Bedienpersonen eingestellt werden, was besonders komfortabel ist.

Nach einer Ausgestaltung ist das erste Dämpfungsbauteil an einer Drehwelle des mindestens einen elastisch auslenkbaren Seitenarms angeordnet. Die mindestens zwei Seitenarme weisen hierbei jeweils eigene Drehwellen auf, um dessen Drehachsen die Seitenarme von der Ruheposition an dem Antriebsteil in die Betriebsposition fortragend vom Antriebsteil verstellt werden können. Insbesondere können die mindestens zwei Seitenarme um ihre jeweilige Drehwelle in die Ruheposition eingeklappt oder in die Betriebsposition ausgeklappt werden. Die Drehwellen können dabei insbesondere senkrecht zur horizontalen Bewegungsebene des Fahrzeugs stehen. Das erste Dämpfungsbauteil kann, soweit der entsprechende Seitenarm seine Betriebsposition erreicht, mit dem zweiten Dämpfungsbauteil in Kontakt treten. Eine Federung bzw. Dämpfung erfolgt somit erst in der Betriebsposition und nicht bereits beim Ausklappen des entsprechenden Seitenarms. Die Anordnung des ersten Dämpfungsbauteils an der Drehwelle ist konstruktiv besonders einfach.

Nach einer weiteren Ausgestaltung weist die Dämpfungseinrichtung mehrere paarweise zusammenwirkende erste Dämpfungsbauteile und zweite Dämpfungsbauteile mit unterschiedlicher Dämpfungsstärke auf. An dem elastisch auslenkbaren Seitenarm bzw. an dem Gehäuse der Rückhaltevorrichtung können also jeweils mehrere Dämpfungsbauteile vorgesehen sein. Dabei wirkt jeweils ein erstes Dämpfungsbauteil mit jeweils einem zweiten Dämpfungsbauteil zusammen. Die jeweils zusammenwirkenden Dämpfungsbauteile können beispielsweise durch unterschiedlich stark elastische Elemente unterschiedliche Feder- bzw. Dämpfungsstärken aufweisen. Auf diese Weise kann eine mehrstufige Federung bzw. Dämpfung des Seitenarms bzw. der Seitenarme erreicht werden. Insbesondere kann hierdurch eine progressive Federung bzw. Dämpfung erreicht werden. Beispielsweise kann ein erstes Paar Dämpfungselemente zum Abfangen geringfügiger Stöße, beispielsweise von Vibrationen, ausgebildet sein und ein zweites Paar Dämpfungselemente zum Abfangen stärkerer Stöße, bedingt beispielsweise durch Auftreffen einer Bedienperson. Beispielsweise können die ersten Dämpfungselemente eine Federwirkung entfalten, um die Seitenarme nach einer Auslenkung in ihre Ausgangslage zurückzuführen, während die zweiten Dämpfungselemente eine Dämpfungswirkung entfalten, um einer Schwingung der Seitenarme entgegenzuwirken.

Nach einer Ausgestaltung ist weiterhin mindestens ein unelastischer Festanschlag vorgesehen, der die Auslenkbewegung des mindestens einen elastisch auslenkbaren Seitenarms nach außen begrenzt. Es kann also zusätzlich zu der Federung bzw. Dämpfung des Seitenarms auch ein starrer Festanschlag vorgesehen sein. Ausgehend von der Betriebsposition ist der mindestens eine elastisch auslenkbare Seitenarm dabei zunächst elastisch nach außen auslenkbar bevor die Bewegung des Seitenarms nach außen durch den unelastischen Festanschlag vollständig gestoppt wird. Somit wird sichergestellt, dass der jeweilige Seitenarm nicht zu weit nach außen auslenkt.

Nach einer Ausgestaltung ist der Festanschlag durch den Endbereich einer an der Rückhaltevorrichtung, insbesondere an einem Gehäuse der Rückhaltevorrichtung, angeordneten Nut gebildet, wobei in der Nut ein mit dem mindestens einen elastisch auslenkbaren Seitenarm verbundener Zapfen geführt wird. Auch kann der Festanschlag durch den Endbereich einer an dem mindestens einen elastisch auslenkbaren Seitenarm angeordneten Nut gebildet sein, wobei in der Nut ein mit der Rückhaltevorrichtung, insbesondere mit einem Gehäuse der Rückhaltevorrichtung, verbundener Zapfen geführt wird. Bei einer Auslenkung des mindestens einen elastischen Seitenarms nach außen wird folglich der Zapfen die Nut entlanggeführt. Erreicht der Zapfen das Ende der Nut, so stoppt die nach Außenbewegung des Seitenarms durch Erreichen des Festanschlags.

Nach einer Ausgestaltung ist die Standplattform in eine Ruheposition im Antriebsteil und in eine Betriebsposition fortragend vom Antriebsteil verstellbar. Beispielsweise kann die Standplattform an das Antriebsteil in die Ruheposition eingeklappt werden bzw. gegenüber dem Antriebsteil in die Betriebsposition ausgeklappt werden. Auch könnte die Standplattform gegenüber dem Antriebsteil ein- oder ausgefahren werden. Eine das Flurförderzeug bedienende Person kann mit dem Fahrzeug mitlaufen, wenn die Standplattform in der Ruheposition ist oder mit dem Fahrzeug mitfahren, wenn die Standplattform in der Betriebsposition ist. Wenn die Standplattform die Betriebsposition eingenommen hat, können sich auch die mindestens zwei Seitenarme in ihrer Betriebsposition befinden.

Ein Ausführungsbeispiel der Erfindung wird im Folgenden anhand von Figuren erläutert. Es zeigen
- Figur 1: ein Flurförderzeug in einer perspektivischen Ansicht,
- Figur 2: eine Rückhaltevorrichtung mit zwei Seitenarmen,
- Figur 3: einen Ausschnitt der Rückhaltevorrichtung aus Fig. 2 mitsamt einer Dämpfungseinrichtung in einer Draufsicht, und
- Figur 4: einen Ausschnitt der Rückhaltevorrichtung aus Fig. 2 mitsamt einer Dämpfungseinrichtung in einer perspektivischen Ansicht.

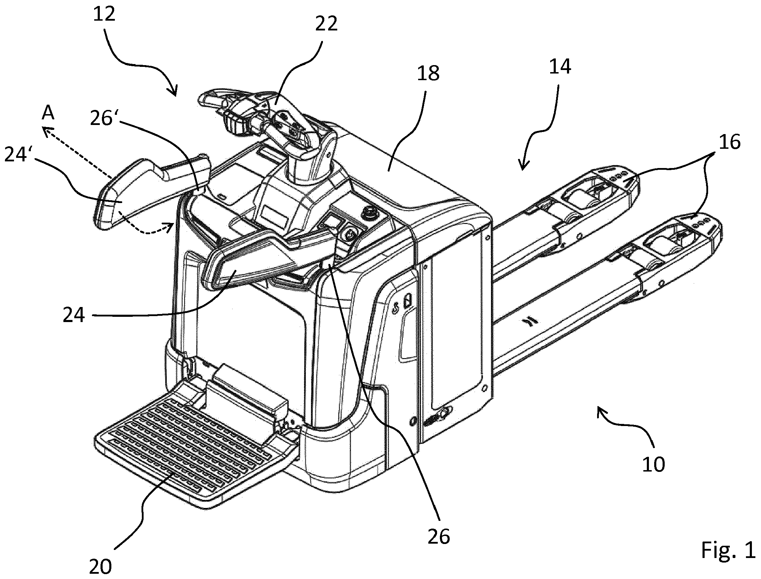

In Figur 1 ist ein Flurförderzeug 10 dargestellt, umfassend einen Antriebsteil 12 und einen Lastteil 14. Der Lastteil 14 umfasst wiederum einen Hubteil bzw. einen Hubmast 18 sowie zwei Lastgabeln 16. Am Antriebsteil 12 ist eine Deichsel 22 zur Bedienung des Flurförderzeugs 10 angeordnet. Zudem sind in Figur 1 zwei sich von dem Antriebsteil 12 forterstreckende Seitenarme 24, 24' ersichtlich. Die Seitenarme 24, 24' befinden sich hierbei in einer Betriebsposition. Ausgehend von dieser Betriebsposition können die Seitenarme 24, 24' entlang der gestrichelten Pfeillinie an das Antriebsteil 12 in eine Ruheposition verstellt werden, in der sich die Seitenarme überlappen. Hierbei werden die Seitenarme 24, 24' um ihre jeweilige Drehwelle 26, 26' gedreht. Weiterhin ist in Figur 1 eine Standplattform 20 zur Aufnahme einer Bedienperson ersichtlich. Die Standplattform 20 befindet sich ebenfalls in der Betriebsposition und kann zur Einnahme ihrer Ruheposition nach oben an das Antriebsteil 12 herangeklappt werden.

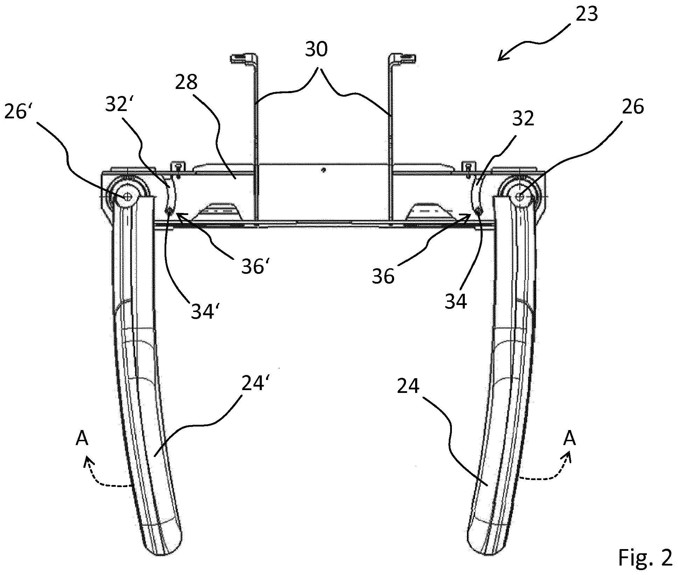

Eine auf der Standplattform 20 stehende Bedienperson kann über die Deichsel 22 das Flurförderzeug 10 steuern und wird dabei über die Seitenarme 24, 24' sicher auf der Standplattform 20 gehalten. Die beiden Seitenarme 24, 24' sind hierbei gedämpft nach außen auslenkbar ausgebildet. Die Seitenarme 24, 24' können also, wie in Figur 1 durch den gestrichelten Pfeil A dargestellt, aus ihrer Betriebsposition heraus ein Stück nach außen, also vom Flurförderzeug 10 seitlich fort ausgelenkt werden. Die Auslenkung nach außen ist auch in Figur 2 durch gestrichelte Pfeillinien A gekennzeichnet. Diese Auslenkung erfolgt elastisch.

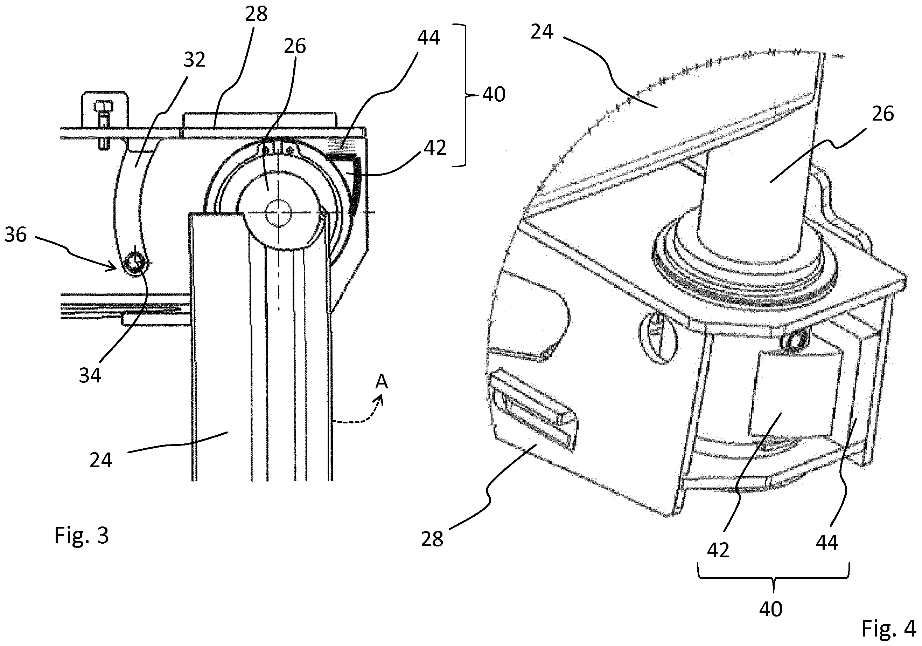

Figur 2 zeigt eine Rückhaltevorrichtung 23, welche die Seitenarme 24, 24' umfasst. Die Seitenarme 24, 24' sind dabei über ihre Drehwellen 26, 26' mit einem Gehäuse 28 der Rückhaltevorrichtung 23 verbunden, wobei die Rückhaltevorrichtung 23 wiederum über Verbindungselemente 30 des Gehäuses 28 mit dem Antriebsteil 12 des Flurförderzeugs 10 verbunden wird. Weiterhin sind in Figur 2 Endanschläge 36, 36' ersichtlich, die durch den Endbereich von Nuten 32, 32' gebildet werden. Bei einer Bewegung beispielsweise des Seitenarms 24 nach außen wird der Zapfen 34 entlang der Nut 32 geführt und schlägt bei Erreichen einer Maximalauslenkung an das Ende der Nut an. Somit ist der Endanschlag 36 erreicht. Entsprechendes gilt für den Seitenarm 24'. Dies ist besonders in Figur 3 zu erkennen.

In Figur 3 ist darüber hinaus auch die Dämpfungseinrichtung 40 dargestellt. Die Dämpfungseinrichtung 40 umfasst ein erstes Dämpfungselement 42, welches als Anschlag ausgebildet und an der Drehwelle 26 des Seitenarms 24 angeordnet ist. Weiterhin umfasst die Dämpfungseinrichtung 40 ein zweites Dämpfungselement 44, welches als elastisches Element ausgebildet ist und an dem Gehäuse 28 und somit an dem Antriebsteil 12 angeordnet ist. Dies ist insbesondere auch in Figur 4 gut zu erkennen. Der keilförmig ausgebildete Anschlag 42 ist mit der Drehwelle 26 fest verbunden und bewegt sich folglich bei einer Nach-außen-Bewegung des Seitenarms 24 gemeinsam mit der Drehwelle 26. Bei einer derartigen Bewegung wird der Anschlag 42 gegen das elastische Element 44 gedrückt, wodurch die Bewegung des Seitenarms 24 gedämpft bzw. abgefedert wird. Hierdurch wird ein besonders hoher Komfort für die Bedienperson sowie eine höhere Widerstandsfähigkeit der Seitenarme gegenüber Belastungen erreicht. Der Seitenarm 24' kann entsprechende Dämpfungselemente aufweisen. Das elastische Element 44 kann beispielsweise eine (gedämpfte) Feder sein.

### Bezugszeichenliste

- 10: Flurförderzeug
- 12: Antriebsteil
- 14: Lastteil
- 16: Lastgabeln
- 18: Hubteil/Hubmast
- 20: Standplattform
- 22: Deichsel
- 23: Rückhaltevorrichtung
- 24, 24': Seitenarme
- 26, 26': Drehwellen
- 28: Gehäuse
- 30: Verbindungselemente
- 32, 32': Nuten
- 34, 34': Zapfen
- 36, 36': Endanschläge
- 40: Dämpfungseinrichtung
- 42: erstes Dämpfungselement
- 44: zweites Dämpfungselement

## Patentansprüche

1. Flurförderzeug, insbesondere Elektrohubwagen, umfassend einen Antriebsteil (12), eine mit dem Antriebsteil (12) verbundene Standplattform (20) sowie eine an dem Antriebsteil (12) angeordnete Rückhaltevorrichtung (23) mit mindestens zwei Seitenarmen (24, 24'), die verstellbar in eine Ruheposition an das Antriebsteil (12) und in eine Betriebsposition fortragend vom Antriebsteil (12) ausgebildet sind, wobei die Seitenarme (24, 24') in der Betriebsposition einander gegenüberliegend vom Antriebsteil (12) fortragen zur seitlichen Sicherung einer auf der Standplattform (20) stehenden Bedienperson, **dadurch gekennzeichnet, dass** mindestens einer der Seitenarme (24, 24') ausgehend von der Betriebsposition elastisch seitlich nach außen auslenkbar ist.

2. Flurförderzeug nach Anspruch 1, **dadurch gekennzeichnet, dass** die Rückhaltevorrichtung (23) ein Gehäuse (28) und eine Dämpfungseinrichtung (40) aufweist, wobei die Dämpfungseinrichtung ein an dem mindestens einen elastisch auslenkbaren Seitenarm (24) angeordnetes erstes Dämpfungsbauteil (42) und ein in oder an dem Gehäuse (28) angeordnetes zweites Dämpfungsbauteil (44) umfasst, wobei im Zuge der Auslenkbewegung des mindestens einen elastisch auslenkbaren Seitenarms (24) nach außen das erste Dämpfungsbauteil (42) und das zweite Dämpfungsbauteil (44) zusammenwirken.

3. Flurförderzeug nach Anspruch 2, **dadurch gekennzeichnet, dass** das erste Dämpfungsbauteil (42) einen Anschlag und das zweite Dämpfungsbauteil (44) ein elastisches Element umfasst oder dass das erste Dämpfungsbauteil (42) ein elastisches Element und das zweite Dämpfungsbauteil (44) einen Anschlag umfasst oder dass das erste Dämpfungsbauteil (42) und das zweite Dämpfungsbauteil (44) ein elastisches Element umfasst.

4. Flurförderzeug nach Anspruch 3, **dadurch gekennzeichnet, dass** die Federstärke und/oder Dämpfungsstärke des elastischen Elements verstellbar ist.

5. Flurförderzeug nach einem der Ansprüche 2 bis 4, **dadurch gekennzeichnet, dass** das erstes Dämpfungsbauteil (42) an einer Drehwelle (26) des mindestens einen elastisch auslenkbaren Seitenarms (24) angeordnet ist.

6. Flurförderzeug nach einem der Ansprüche 2 bis 5, **dadurch gekennzeichnet, dass** die Dämpfungseinrichtung (40) mehrere paarweise zusammenwirkende erste Dämpfungsbauteile und zweite Dämpfungsbauteile mit unterschiedlicher Dämpfungsstärke aufweist.

7. Flurförderzeug nach einem der vorhergehenden Ansprüche, **dadurch gekennzeichnet, dass** die Rückhaltevorrichtung (23) weiterhin mindestens einen unelastischen Festanschlag (36) umfasst, der die Auslenkbewegung des mindestens einen elastisch auslenkbaren Seitenarms (24) nach außen begrenzt.

8. Flurförderzeug nach Anspruch 6, **dadurch gekennzeichnet, dass** der Festanschlag (36) durch einen Endbereich einer an der Rückhaltevorrichtung (23) angeordneten Nut (32) gebildet ist, wobei in der Nut (32) ein mit dem mindestens einen elastisch auslenkbaren Seitenarm (24) verbundener Zapfen (34) geführt wird oder dass der Festanschlag durch einen Endbereich einer an dem mindestens einen elastisch auslenkbaren Seitenarm angeordneten Nut gebildet ist, wobei in der Nut ein mit der Rückhaltevorrichtung verbundener Zapfen geführt wird.

9. Flurförderzeug nach einem der vorhergehenden Ansprüche, **dadurch gekennzeichnet**, die Standplattform (20) in eine Ruheposition am Antriebsteil (12) und in eine Betriebsposition fortragend vom Antriebsteil (12) verstellbar ist.

## Claims

1. Industrial truck, in particular an electric lifting truck, comprising a drive part (12), a stand-on platform (20) connected to the drive part (12) and a retaining device (23) arranged on the drive part (12) and having at least two side arms (24, 24'), which are constructed so as to be adjustable into a rest position against the drive part (12) and projecting from the drive part (12) in an operating position, wherein the side arms (24, 24') in the operating position project away from the drive part (12) opposite one another for laterally securing an operator standing on the stand-on platform (20), **characterised in that** at least one of the side arms (24, 24') can be deflected elastically laterally outwards starting from the operating position.

2. Industrial truck according to claim 1, **characterized in that** the retaining device (23) has a housing (28) and a damping device (40), the damping device comprising a first damping component (42) arranged on the at least one elastically deflectable side arm (24) and a second damping component (44) arranged in or on the housing (28), the first damping component (42) and the second damping component (44) acting together in the course of the outward deflection movement of the at least one elastically deflectable side arm (24).

3. Industrial truck according to claim 2, **characterized in that** the first damping component (42) comprises a stop and the second damping component (44) comprises an elastic element or **in that** the first damping component (42) comprises an elastic element and the second damping component (44) comprises a stop or **in that** the first damping component (42) and the second damping component (44) comprises an elastic element.

4. Industrial truck according to claim 3, **characterized in that** the spring strength and/or damping strength of the elastic element is adjustable.

5. Industrial truck according to one of claims 2 to 4, **characterized in that** the first damping component (42) is arranged on a rotary shaft (26) of the at least one elastically deflectable side arm (24).

6. Industrial truck according to one of claims 2 to 5, **characterized in that** the damping device (40) has a plurality of first damping components operating in pairs and second damping components with different damping strengths.

7. Industrial truck according to one of the preceding claims, **characterized in that** the retaining device (23) further comprises at least one inelastic fixed stop (36) which limits the outward deflection movement of the at least one elastically deflectable side arm (24).

8. Industrial truck according to claim 6, **characterized in that** the fixed stop (36) is formed by an end region of a groove (32) arranged on the retaining device (23), wherein a pin (34) connected to the at least one elastically deflectable side arm (24) is guided in the groove (32), or **in that** the fixed stop is formed by an end region of a groove arranged on the at least one elastically deflectable side arm, wherein a pin connected to the retaining device is guided in the groove.

9. Industrial truck according to one of the preceding claims, **characterized in that** the stand-on platform (20) can be moved into a rest position on the drive part (12) and into an operating position projecting from the drive part (12).

## Revendications

1. Chariot de manutention, en particulier un chariot élévateur électrique, comprenant un élément d'entraînement (12), une plate-forme d'opérateur (20) reliée à l'élément d'entraînement (12) ainsi qu'un dispositif de retenue (23) disposé sur l'élément d'entraînement (12) avec au moins deux bras latéraux (24, 24'), qui sont conçus de manière à être réglables sur l'élément d'entraînement (12) dans une position de repos et en dépassant de l'élément d'entraînement (12) dans une position de service, dans lequel les bras latéraux (24, 24') dépassent de l'élément d'entraînement (12) en vis-à-vis l'un de l'autre dans la position de service pour protéger latéralement un opérateur se tenant sur la plate-forme (20), **caractérisé en ce qu'**au moins l'un des bras latéraux (24, 24') peut être dévié latéralement vers l'extérieur de façon élastique à partir de la position de service.

2. Chariot de manutention selon la revendication 1, **caractérisé en ce que** le dispositif de retenue (23) présente un boîtier (28) et un dispositif d'amortissement (40), dans lequel le dispositif d'amortissement comprend un premier composant amortisseur (42) disposé sur au moins ledit bras latéral (24) pouvant être dévié de façon élastique et un second composant amortisseur (44) disposé dans ou sur le boîtier (28), dans lequel le premier composant amortisseur (42) et le second composant amortisseur (44) interagissent au cours du mouvement de déviation dudit bras latéral (24) au moins pouvant être dévié de façon élastique vers l'extérieur.

3. Chariot de manutention selon la revendication 2, **caractérisé en ce que** le premier composant amortisseur (42) comprend une butée et le second composant amortisseur (44) un élément élastique ou que le premier composant amortisseur (42) comprend un élément élastique et le second composant amortisseur (44) une butée ou que le premier composant amortisseur (42) et le second composant amortisseur (44) comprennent un élément élastique.

4. Chariot de manutention selon la revendication 3, **caractérisé en ce que** la force exercée par le ressort et/ou la force d'amortissement de l'élément élastique sont réglables.

5. Chariot de manutention selon l'une des revendications 2 à 4, **caractérisé en ce que** le premier composant amortisseur (42) est disposé sur un arbre rotatif (26) dudit bras latéral (24) au moins pouvant être dévié de façon élastique.

6. Chariot de manutention selon l'une des revendications 2 à 5, **caractérisé en ce que** le dispositif d'amortissement (40) présente plusieurs premiers composants amortisseurs et seconds composants amortisseurs d'une force d'amortissement différente interagissant par paire.

7. Chariot de manutention selon l'une des revendications précédentes, **caractérisé en ce que** le dispositif de retenue (23) comprend encore au moins une butée fixe (36) inélastique, qui limite le mouvement de déviation dudit bras latéral (24) au moins pouvant être dévié de façon élastique vers l'extérieur.

8. Chariot de manutention selon la revendication 6, **caractérisé en ce que** la butée fixe (36) est formée par une zone terminale d'une rainure (32) disposée sur le dispositif de retenue (23), dans lequel un tenon (34) relié audit bras latéral (24) au moins pouvant être dévié de façon élastique est guidé dans la rainure (32) ou que la butée fixe est formée par une zone terminale d'une rainure disposée sur ledit bras latéral au moins pouvant être dévié de façon élastique, dans lequel un tenon relié au dispositif de retenue est guidé dans la rainure.

9. Chariot de manutention selon l'une des revendications précédentes, **caractérisé en ce que** la plate-forme d'opérateur (20) est réglable sur l'élément d'entraînement (12) dans une position de repos et en dépassant de l'élément d'entraînement (12) dans une position de service.
